# EUROPEAN PATENT SPECIFICATION

(11) **EP 2 003 530 B1**
(45) Date of publication and mention of the grant of the patent: **01.08.2012**
(21) Application number: 08157616.7
(22) Date of filing: 05.06.2008
(51) Int. Cl.: G06F 1/16, H04M 1/02, G06F 3/048

(54) **Portable device**
Tragbare Vorrichtung
Dispositif portable

(30) Priority: 12.06.2007 KR 20070057427
(43) Date of publication of application: 17.12.2008
(73) Proprietor: LG Electronics Inc., Seoul, 150-721 (KR)
(72) Inventor: Hong, Bong-Kuk, Jeongeup-si, Jeonbuk, 580-050 (KR)
(74) Representative: Vossius & Partner

(56) References cited:
- EP-A1- 0 969 641
- EP-A1- 1 292 086
- EP-A1- 1 387 246
- EP-A2- 1 517 568
- WO-A1-01/17204
- WO-A2-2006/123211
- GB-A- 2 381 988
- US-A1- 2004 212 602

## Description

The present invention relates to a portable device for inputting various data with a touch screen.

In recent years, various portable devices have been developed that enable a user to search for electronically archived information anywhere and at any time. Such portable devices include notebook computers, mobile phones, personal digital assistants (PDAs), portable multimedia players (PMPs), PlayStation portables (PSPs), personal navigation devices (PNDs), and the like. These portable devices can connect to the Internet (or other networks) and can perform voice communication via wireless communication networks as well as can store information and play back stored movies and music files.

Since such portable devices are often small to improve portability and mobility, they often include a touch screen instead of a large and heavy input unit, such as a keyboard.

A touch screen is a means for inputting information to a data processing system and is used in connection with a display unit such as a liquid crystal display (LCD). A conventional method for inputting text via a touch screen includes a handwriting recognition mode and a key selection mode. Here, in the handwriting recognition mode, a user directly inputs text to the screen. In the key selection mode, a user inputs text by touching activated keys.

Conventional handwriting recognition techniques frequently lead to a misinterpretation of text input to the screen, thereby frequently leading to input errors. Therefore, the key selection mode, which encounters relatively few input errors, is more frequently used. However, with conventional key selection techniques, since a plurality of keys may be activated on a portion of a narrow screen, there is a disadvantage in that the size of the keys is relatively small and an input operation is inconvenient. Meanwhile, since the size of the LCD of the portable device tends to be large in order to realize the key selection mode in a wider screen, there is a problem in that the increased size of the LCD undesirably becomes an obstacle to miniaturization of the portable device.
EP 1 387 246 shows a foldable and portable device comprising an inner and an outer display or touch display, respectively.

Accordingly, the present invention is conceived to solve the aforementioned problems in the prior art. An object of the present invention is to provide a portable device, which is configured so as to use a key selection mode in a wider screen.

Another object of the present invention is to provide a portable device, wherein a cover for covering a main body of the portable device can be used as an input unit.

In order to accomplish these objects, there is provided a portable device, which comprises a main body having a display unit for displaying information provided with on one surface thereof; and a touch input board pivotally coupled to one side of the main body to be unfolded at a predetermined angle with respect to the display unit, wherein first and second touch screens are respectively provided on both surfaces of the touch input board, thereby being selectively activated according to a pivot angle of the touch input board.

Further, the first touch screen may be provided to face the display unit, and a key display panel may be provided between the first touch screen and the second touch screen to display a plurality of keys and information when the first touch screen is activated.

In addition, a detection switch may be provided in one of the main body and the touch input board to deactivate the first touch screen when the touch input board is folded on the display unit and to activate the first touch screen when the touch input board is unfolded from the display unit.

A seating part depressed along an edge of the main body may be formed on the surface of the main body where the display unit is disposed; the touch input board may comprise the first and second touch screens and a frame formed to surround the key display panel; and a protruding part may be formed along an edge of the frame to be seated in the seating part when the touch input board is folded on the display unit.

According to another aspect of the present invention, a touch input board is slidably coupled to a main body to selectively shield a display unit; and separate keys are displayed on the touch input board such that a user can select the keys when the touch input board slides with respect to the main body to expose a portion of the display unit.

According to a further aspect of the present invention, there is provided a portable device, which comprises a main body having a display unit for displaying information provided with on one surface thereof; and a touch input board is provided to protrude from the main body, wherein a touch screen provided on one surface of the touch input board is selectively activated when the touch input board is protruded from the main body.

Here, the touch input board may be provided on an upper portion of the display unit of the main body to selectively shield the display unit.

In addition, a key display panel may be further provided on the other surface of the touch input board to display a plurality of keys and information when the touch screen is activated.

According to the present invention as described above, the input unit is selectively separated from the display unit of the main body to use the key selection mode on the entire screen of the input unit, thereby minimizing an input error and improving convenience in input.

Also according to the present invention, there is provided a computer program product and a method to execute the functions described above.

The above and other objects, features and advantages of the embodiments as broadly described herein will become more apparent from the following detailed description taken in conjunction with the drawings, in which:

Fig. 1 is a perspective view of a first embodiment of a portable device according to the present invention;

Fig. 2 is a perspective view of the first embodiment of the portable device according to the present invention, in which a touch input board is unfolded from a main body;

Fig. 3 is a schematic sectional view taken along line A-A' of Fig. 1;

Fig. 4 is a schematic sectional view taken along line B-B' of Fig. 2;

Figs. 5a to 5c are perspective views illustrating usage of the first embodiment of the portable device according to the present invention; and

Fig. 6 is a perspective view of a second embodiment of the portable device according to the present invention.

### [Embodiment 1]

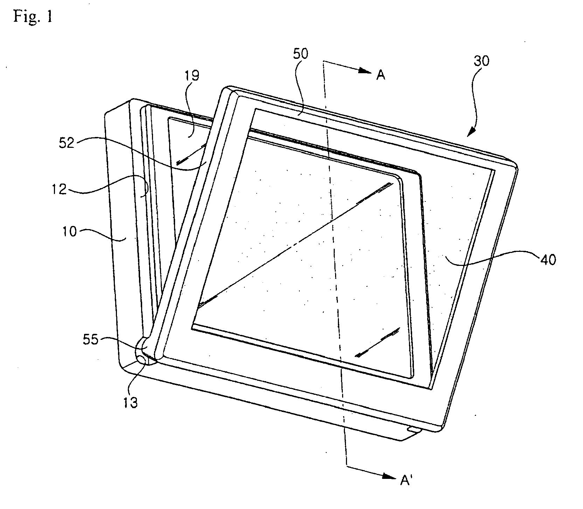

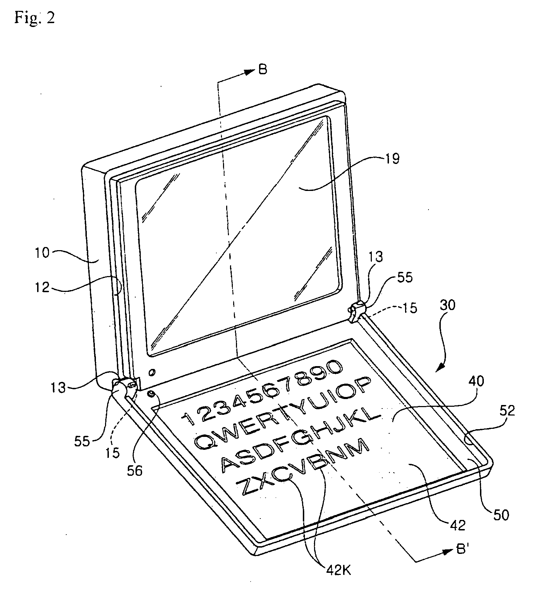

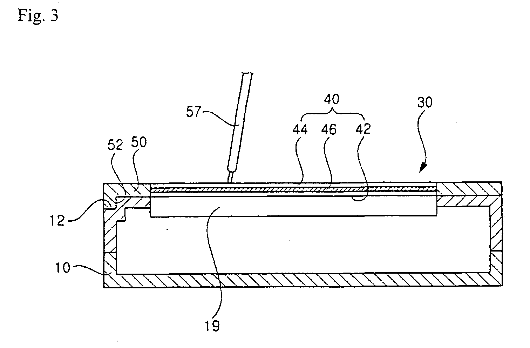

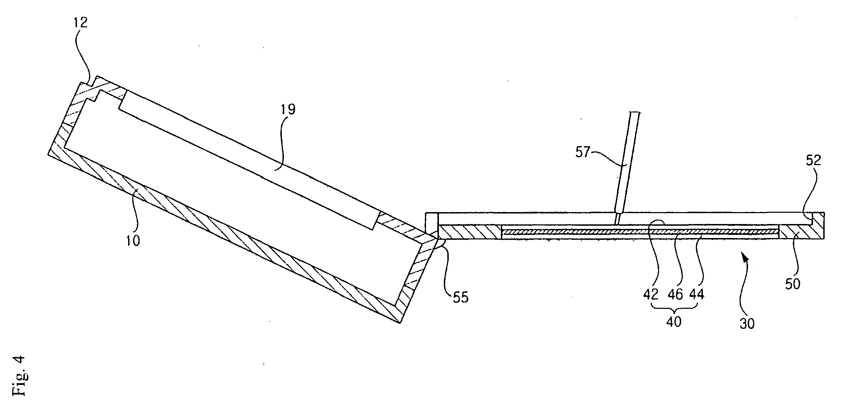

Fig. 1 shows a perspective view of a first embodiment of a portable device according to the present invention; Fig. 2 shows a perspective view of the embodiment of the portable device according to the present invention, in which a touch input board is unfolded from a main body; Fig. 3 shows a schematic sectional view taken along line A-A' of Fig. 1; and Fig. 4 shows a schematic sectional view taken along line B-B' of Fig. 2.

As shown in the figures, a main body 10 of the portable device is formed in the shape of a substantially flat rectangular hexahedron. Various components for operating the device are disposed inside the main body 10. The main body 10 has a seating part 12 formed along an edge of one surface thereof. The seating part 12 is formed by depressing the surface of the main body 10 which faces a touch input board 30 to be described below.

Referring to Figs. 1 and 2, the main body 10 has hinge receiving recesses 13 formed at both sides of a lower end of the main body 10. The hinge receiving recesses 13 are formed by depressing both the sides of the lower end of the main body 10 into the main body 10. The hinge receiving recesses 13 are configured so that hinge parts 55 of the touch input board 30 to be described below are seated therein. Each hinge receiving recess 13 has a hinge shaft 15 protruding from one side of the hinge receiving recess 13. That is, the hinge shafts 15 are formed to protrude from both sides of the lower end of the main body 10. Each of the hinge shafts 15 is inserted into a hinge groove (not shown) of the hinge part 55 to pivotally support the hinge part 55. The hinge shafts 15 are provided with components for electrically connecting a display unit 19 and the touch input board 30 that will be described below.

In the meantime, the display unit 19 for displaying various data or signals processed by an internal system is provided on the front surface of the main body 10. Examples of the display unit include an electro-luminescent display (ELD), a liquid crystal display (LCD), a plasma display panel (PDP), and the like.

The touch input board 30 is pivotally coupled to the lower end of the main body 10. In this embodiment, the touch input board 30 can be folded or unfolded at a predetermined angle with respect to the main body 10. The touch input board 30 can move to the opening position which exposes the display unit 19 and the overlapping position which covers the display unit 19.

The touch input board 30 includes an input unit 40 for inputting operation signals and outputting information, and a frame 50 surrounding the input unit 40 to support it. The input unit 40 is a transparent panel.

The configuration of the input unit 40 is illustrated in detail in Figs. 3 and 4. The input unit 40 is formed to correspond to the display unit 19 in size.

A first touch screen 42 is provided on one surface of the input unit 40 facing the display unit 19. A second touch screen 44 is provided on the other surface of the input unit 40 which is opposite to the surface thereof on which the first touch screen 42 is disposed. The first and second touch screens 42 and 44 are typical touch screens, which detect contact or pressure or proximity and apply an input signal to a main system. For the touch screens, various types of touch screens can be employed according to a method of detecting contact or pressure or proximity, such as a contact type capacitive method, a pressure type resistive method, an infrared detection method, and the like.

Meanwhile, a key display panel 46 is interposed between the first touch screen 42 and the second touch screen 44. The key display panel 46 serves to display a plurality of keys 42K for data input. The key display panel 46 is activated and displays the keys 42K when the first touch screen 42 is used.

More specifically, the key display panel 46 according to this embodiment is activated when the first touch screen 42 is used and deactivated when the second touch screen 44 is used. Here, deactivation of the key display panel 46 means that the key display panel 46 becomes transparent and allows contents displayed on the display unit 19 to be viewed through the key display panel 46.

As such, since the key display panel 46 is deactivated when the touch input board 30 is folded on the main body 10 as shown in Fig. 3 and allows the display unit 19 to be viewed through the second touch screen 44, a user can select the keys displayed on the display unit 19.

On the other hand, when the touch input board 30 is unfolded at a predetermined angle or more as shown in Fig. 4, the key display panel 46 is activated and the plurality of keys 42K are displayed thereon, so that the user can select the keys 42K on the first touch screen 42.

Meanwhile, the frame 50 is formed to surround the input unit 40 and to have a predetermined width. The frame 50 has a size corresponding to the main body 10. The frame has a protruding part 52 formed along an edge of the frame 50 and protruding toward the main body 10. The protruding part 52 is a part to be seated on the seating part 12 when the touch input board 30 is folded on the main body 10. The protruding part 52 is seated on the seating part 12, thereby serving to prevent the touch input board 30 from moving in a state where the touch input board 30 is in contact with on the main body 10.

The hinge parts 55 are provided at both sides of the lower end of the frame 50. Each of the hinge parts 55 is formed at one side with a hinge groove (not shown), into which the hinge shaft 15 is inserted. The hinge parts 55 allow the touch input board 30 to pivot about the hinge shafts 15 with respect to the main body 10.

A detection switch 56 is provided on one side of the frame 50 facing the main body 10. The detection switch 56 is to detect an angle by which the touch input board 30 is unfolded from the main body 10. The detection switch 56 is pushed to turn off the first touch screen 42 and the key display panel 46 when the touch input board 30 is folded on the main body 10, but the pressed detection switch 56 is projected to turn on the first touch screen 42 and the key display panel 46 when the touch input board 30 is unfolded from the main body 10. The detection switch 56 can be provided on the main body facing side of the touch input board 30. The detection switch 56 may be used a tact switch or sensors.

Reference numeral 57 designates an input pen used for touching the touch screen.

Hereinafter, the operation of the first embodiment of the portable device according to the present invention will be described in detail.

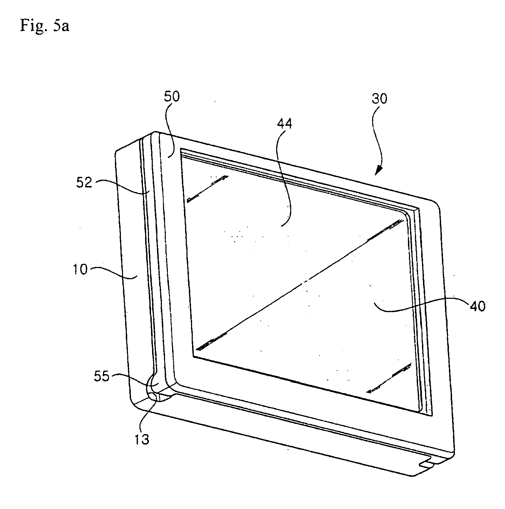

Figs. 5a to 5c are perspective views illustrating usage of the first embodiment of the portable device according to the present invention.

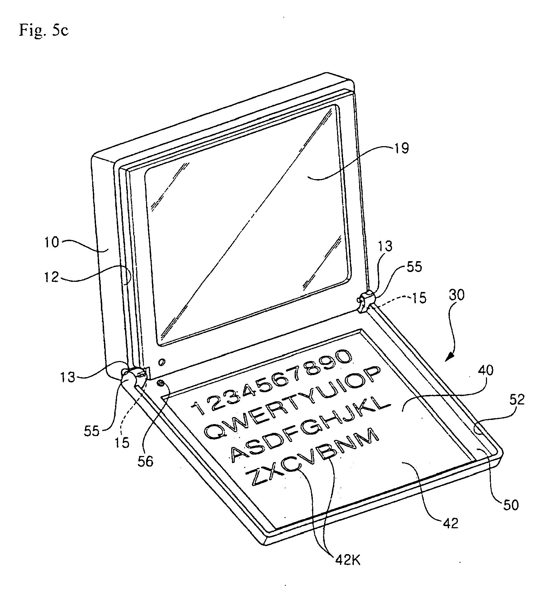

In the portable device of the present invention, the touch input board 30 can be used in a state of being in close contact with the display unit 19 of the main body 10 as shown in Fig. 5a, or in a state of being unfolded from the main body 10 as shown in Fig. 5c.

More specifically, in a state as shown in Fig. 5a, the second touch screen 44 (see Fig. 3) of the touch input board 30 overlaps the display unit 19 and is activated. At this time, the detection switch 56 provided on one side of the touch input board 30 is pushed by the main body 10 to turn off the first touch screen 42 and the key display panel 46. The key display panel 46 becomes transparent in an off state to allow a user to view the information displayed on the display unit 19.

In such a state, the user can select the keys (not shown) or operations displayed on the display unit 19 through generating second signal by touching or closely coming into the second touch screen 44. Of course, the user can input operation signals or information by directly inputting text to the second touch screen 44.

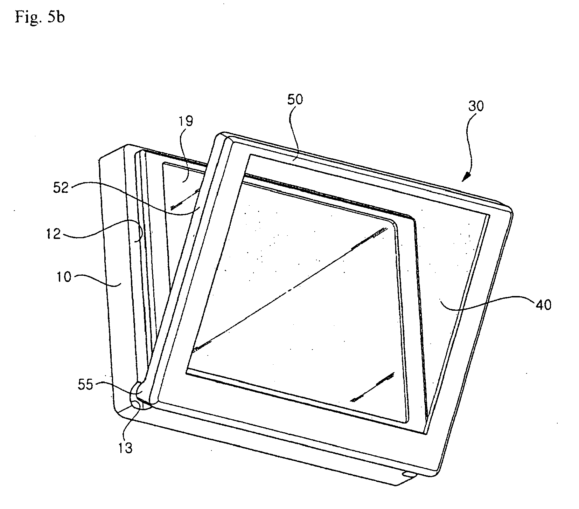

Next, a method of inputting text by activating the first touch screen 42 will be described. First, as shown in Fig. 5b, the touch input board 30 is pivoted to be unfolded at a predetermined angle with respect to the main body 30. At this time, since the touch input board 30 is unfolded from the main body 10, the detection switch 56 is released from the depressed state to turn on the first touch screen 42 and the key display panel 46.

A completely unfolded state of the touch input board 30 is shown in Fig. 5c. In this state, the user can input various kinds of information via the first touch screen 42. At this time, the plurality of keys 42K configured as a keyboard for inputting data is displayed on the key display panel 46.

In this way, since the plurality of keys 42K is displayed over the entire region of the key display panel 46 rather than a portion thereof, the size of the keys 42K is relatively large, and thus, a user can easily input data. Furthermore, since the display unit 19 and the first touch screen 42 are respectively used as output and input units, the input and output units are separated from each other, thereby improving convenience in use.

### [Embodiment 2]

Hereinafter, a second embodiment of the portable device according to the present invention will be described.

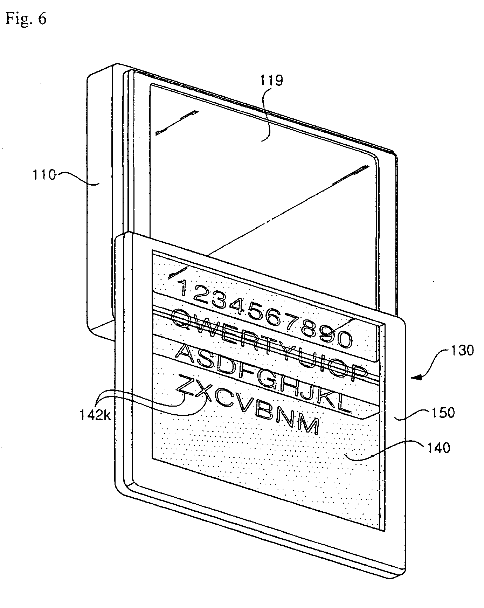

Fig. 6 shows a perspective view of the configuration of the second embodiment of the portable device according to the present invention. Reference numerals increased by one hundred are given to the elements corresponding to those of the first embodiment of the present invention, so that detailed descriptions thereof will be omitted. Here, the description of the second embodiment will be given mainly to different components in order to avoid repetition of descriptions.

A touch input board 130 protrudes to one side with respect to a main body 110 of the portable device. The touch input board 130 includes an input unit 140 and a transparent key display panel (not shown) below the input unit 140. The input unit 140 is a typical touch panel. More specifically, the touch input board 130 is slidably coupled to the main body 110. As shown in Fig. 6, when the touch input board 130 slides on the main body 110, a display unit 119 of the main body 110 is exposed to the outside.

A detection member (not shown) is provided at the main body 110 on the sliding trace of the touch input board 130.

At this time, the touch input board 130 is configured such that an input unit 140 of the touch input board 130 can be activated as soon as the touch input board 130 is partially separated from the display unit 119 of the main body 110 by operation of the detection member. Activation of the input unit 140 means that a plurality of keys 142K are displayed on one surface of the transparent key panel and that the keys 142K can be selected by touching the input unit 140 so that information of the keys 142K is transmitted to the main body 110. To this end, a key display panel (not shown), which is selectively activated to display a plurality of keys and information, may be provided on one surface of the touch input board 130.

According to the second embodiment, the touch input board 130 protects the display unit 119 of the main body 110 by shielding it. At this time, a user can manipulate the keys displayed on the display unit 119 in a touch screen manner through the input unit 140 of the touch input board 130.

In the meantime, when the user wishes to use a wide keyboard, the user can manipulate the keys 142K displayed on the input unit 140, with the keys 142K activated over the entire screen of the input unit 140 of the touch input board 130 by sliding the touch input board 130 from the main body 110.

As set forth before, the portable device as embodied and broadly described herein have the following effects.

According to the present invention, the touch input board having the touch screens on both sides thereof is pivotally installed to the main body, so that the touch input board can be used in a state where the touch input board is folded on or unfolded from the main body according to the user's needs.

When the touch input board is used in a state being unfolded from the main body, the plurality of keys are displayed on the entire surface of the input unit, so that the size of the keys becomes relatively large, which makes it possible for a user to easily perform the input operation.

Further, the touch input board adopts a touch screen manner and is used in a state being selectively separated from the output unit of the main body, thereby improving the convenience in use of the portable device.

Furthermore, the touch input board can shield the display unit of the main body to protect the display unit and can be separated from a portion of the display unit to be used as a key input unit when the input unit needs a larger screen, thereby allowing miniaturization of the portable device while improving the convenience in use of the portable device.

In addition to the above described devices, the present invention includes a corresponding method and computer program product for displaying information on one surface of a display unit; moving a touch input board moveably coupled to one side of the main body to each of an opening position and an overlapping position with respect to the display unit, wherein the touch input board includes transparent first and second touch screens respectively provided on one and other surfaces of the touch input board; and generating, with a detection switch provided in one of the main body and the touch input board, a signal to activate the first touch screen when the touch input board moved to the opening position and a signal to deactivate the first touch screen when the touch input board moved to the overlapping position.

Similarly, there is also a corresponding method and computer program product for displaying information on one surface of a display unit, with a touch input board pivotally coupled to one side of the main body and configured to be unfolded to a predetermined angle with respect to the display unit, wherein the touch input board includes first and opposing second transparent touch screens respectively provided on surfaces of the touch input board; and generating, with a detection member provided in one of the main body and the touch input board, a signal to deactivate the first touch screen when the touch input board is folded and to activate the second touch screen when the touch input board is folded.

Similarly, there is also a corresponding method and computer program product for displaying information on one surface of a display unit, a touch input board pivotally coupled to one side of the main body and configured to be unfolded and folded position at to a predetermined angle with respect to the display unit, wherein the a touch input board including includes first and opposing second transparent touch screens are respectively provided on surfaces of the touch input board, and a key display panel being provided between the first touch screen and the second touch screen, the key display panel configured to display a plurality of keys; and selectively activating the first touch screen and the second touch screen according to the a position of the touch input board relative to the main body.

Similarly, there is a corresponding method and computer program product for displaying information on one surface of a display unit, a touch input board configured to protrude from the main body and slidably coupled to the main body, the touch input board configured to selectively shield the display unit, a touch screen provided on a first surface of the touch input board; selectively activating the touch screen when the touch input board protrudes from the main body; displaying a plurality of keys on a key display panel when the touch screen is activated; and deactivating the key display panel when the touch input board covers the display unit.

Various embodiments described herein may be implemented in a computer-readable medium using, for example, computer software, hardware, or some combination thereof. For a hardware implementation, the embodiments described herein may be implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, other electronic units designed to perform the functions described herein, or a selective combination thereof. In some cases, such embodiments are implemented by controller.

For a software implementation, the embodiments described herein may be implemented with separate software modules, such as procedures and functions, each of which perform one or more of the functions and operations described herein. The software codes can be implemented with a software application written in any suitable programming language and may be stored in memory and executed by a controller or processor.

Although embodiments have been described with reference to a number of illustrative embodiments thereof, it should be understood that numerous other modifications and embodiments can be devised by those skilled in the art that will fall within the scope of the appended claims. In addition to variations and modifications in the component parts and/or arrangements, alternative uses will also be apparent to those skilled in the art.

For example, although it has been described in the first embodiment of the present invention that a user uses the touch input board 30 as an input unit according to the contents displayed on the display unit 19 since the contents are viewed through the touch input board 30 when the key display panel 46 is deactivated, this is not necessarily so. The key display panel 46 also may be activated so as to output the same image as the display unit 19.

Furthermore, although the detection switch 56 is used to detect the unfolded state of the touch input board 30 in these embodiments, two mutually recognizable sensors may be provided on the opposite surfaces of the main body 10 and the touch input board 30 to detect separation of the touch input board 30 from the main body 10.

## Claims

1. A portable device, comprising:
a main body (10) including a display unit (19) configured to display information provided on one surface of the main body;
a touch input board (130) moveably coupled in a sliding manner to one side of the main body and configured to be moved to each of an opening position and an overlapping position with respect to the display unit, **characterized in that**:
the touch input board includes transparent first (42) and second (44) touch screens respectively provided on respective first and second surfaces of the touch input board: and
a detection switch (56) provided on at least one of the main body and the touch input board and configured to generate a signal to activate the first touch screen when the touch input board is moved to the opening position and to deactivate the first touch screen as well as to activate the second touch screen when the touch input board is moved to the overlapping position.

2. The portable device as claimed in claim 1, wherein the touch input board further comprises;
a key display panel provided between the first touch screen and the second touch screen, the key display panel configured to display a plurality of keys when the first touch screen is activated.

3. The portable device as claimed in claim 2, wherein the touch input board comprises a frame formed to surround the first and second touch screens and the key display panel.

4. The portable device as claimed in claim 3, further comprising:
a seating part being depressed along an edge of the main body and formed on the one surface of the main body where the display unit is disposed; and
a protruding part formed along an edge of the frame and configured to be seated in the seating part when the touch input board is in the overlapping position with respect to the display unit.

5. A portable device, comprising:
a main body (10) including a display unit (19) configured to display information provided on one surface of the main body;
a folding touch input board (30) is pivotally coupled to one side of the main body and configured to be unfolded to a predetermined angle with respect to the display unit, **characterized in that**:
the touch input board includes first (42) and second (44) transparent touch screens provided on respective first and second surfaces of the touch input board; and
a detection member (56) provided on at least one of the main body and the touch input board and configured to generate a signal to deactivate the first touch screen and to activate the second touch screen when the touch input board is folded, and to activate the first touch screen when the touch input board is unfolded.

6. The portable device as claimed in claim 5, wherein the touch input board further comprises;
a key display panel provided between the first touch screen and the second touch screen, the key display panel configured to display a plurality of keys when the first touch screen is activated,
wherein the key display panel is a transparent panel.

7. The portable device as claimed in claim 6, wherein the touch input board comprises a frame formed to surround the first and second touch screens and the key display panel.

8. The portable device as claimed in claim 7, further comprising:
a seating part depressed along an edge of the main body and formed on the one surface of the main body where the display unit is disposed, and a protruding part is formed along an edge of the frame and configured to be seated in the seating part when the touch input board is folded on the display unit.

9. The portable device as claimed any of in claim 7 to 8, wherein the key display panel is operated with the first touch screen.

## Patentansprüche

1. Tragbares Gerät, das aufweist:
ein Hauptgehäuse (10), das eine Anzeigeeinheit (19) einschließt, die für die Anzeige von Informationen konfiguriert ist, die an einer Oberfläche des Hauptgehäuses bereitgestellt werden;
eine Berührungs-Eingabeplatte (130), die auf verschiebbare Weise beweglich mit einer Seite des Hauptgehäuses gekoppelt und so konfiguriert ist, dass sie jeweils in eine Öffnungsposition und eine überlappende Position bezüglich der Anzeigeeinheit bewegt werden kann, **dadurch gekennzeichnet, dass**:
die Berührungs-Eingabeplatte einen durchsichtigen ersten (42) bzw. einen durchsichtigen zweiten (44) Berührungsbildschirm einschließt, die an einer ersten bzw. zweiten Oberfläche der Berührungs-Eingabeplatte vorgesehen sind; und
einen Detektionsschalter (56), der am Hauptgehäuse oder an der Berührungs-Eingabeplatte oder an beiden vorgesehen und so konfiguriert ist, dass er ein Signal erzeugt, um den ersten Berührungsbildschirm zu aktivieren, wenn die Berührungs-Eingabeplatte in die Öffnungsposition bewegt wird, und den ersten Berührungsbildschirm zu deaktivieren sowie den zweiten Berührungsbildschirm zu aktivieren, wenn die Berührungs-Eingabeplatte in die überlappende Position bewegt wird.

2. Tragbares Gerät nach Anspruch 1, wobei die Berührungs-Eingabeplatte ferner aufweist:
eine Tastenanzeigetafel, die zwischen dem ersten Berührungsbildschirm und dem zweiten Berührungsbildschirm vorgesehen ist, wobei die Tastenanzeigetafel für die Anzeige einer Vielzahl von Tasten konfiguriert ist, wenn der erste Berührungsbildschirm aktiviert ist.

3. Tragbares Gerät nach Anspruch 2, wobei die Berührungs-Eingabeplatte einen Rahmen aufweist, der so geformt ist, dass er den ersten und den zweiten Berührungsbildschirm und die Tastenanzeigetafel umgibt.

4. Tragbares Gerät nach Anspruch 3, das ferner aufweist:
einen Auflageteil, der entlang einer Kante des Hauptgehäuses abgesenkt ist und auf der einen Oberfläche des Hauptgehäuses ausgebildet ist, wo die Anzeigeeinheit angeordnet ist; und
einen vorstehenden Teil, der entlang einer Kante des Rahmens ausgebildet und so konfiguriert ist, dass er in dem Auflageteil sitzt, wenn sich die Berührungs-Eingabeplatte in der überlappenden Position bezüglich der Anzeigeeinheit befindet.

5. Tragbares Gerät; das aufweist:
ein Hauptgehäuse (10), das eine Anzeigeeinheit (19) einschließt, die für die Anzeige von Informationen konfiguriert ist, die an einer Oberfläche des Hauptgehäuses bereitgestellt werden;
eine klappbare Berührungs-Eingabeplatte (30), die schwenkbar mit einer Seite des Hauptgehäuses gekoppelt und so konfiguriert ist, dass sie bis zu einem vorgegebenen Winkel bezüglich der Anzeigeeinheit aufgeklappt werden kann, **dadurch gekennzeichnet, dass**:
die Berührungs-Eingabeplatte einen durchsichtigen ersten (42) und einen durchsichtigen zweiten (44) Berührungsbildschirm einschließt, die an einer ersten bzw. zweiten Oberfläche der Berührungs-Eingabeplatte vorgesehen sind; und
ein Detektionselement (56), das am Hauptgehäuse oder an der Berührungs-Eingabeplatte oder an beiden vorgesehen und so konfiguriert ist, dass es ein Signal erzeugt, um den ersten Berührungsbildschirm zu deaktivieren und den zweiten Berührungsbildschirm zu aktivieren, wenn die Berührungs-Eingabeplatte zusammengeklappt wird, und den ersten Berührungsbildschirm zu aktivieren, wenn die Berührungs-Eingabeplatte aufgeklappt wird.

6. Tragbares Gerät nach Anspruch 5, wobei die Berührungs-Eingabeplatte ferner aufweist:
eine zwischen dem ersten Berührungsbildschirm und dem zweiten Berührungsbildschirm vorgesehene Tastenanzeigetafel, wobei die Tastenanzeigetafel so konfiguriert ist, dass sie eine Vielzahl von Tasten anzeigt, wenn der erste Berührungsbildschirm aktiviert ist,
wobei die Tastenanzeigetafel eine durchsichtige Tafel ist.

7. Tragbares Gerät nach Anspruch 6, wobei die Berührungs-Eingabeplatte einen Rahmen aufweist, der so geformt ist, dass er den ersten und den zweiten Berührungsbildschirm und die Tastenanzeigetafel umgibt.

8. Tragbares Gerät nach Anspruch 7, das ferner aufweist:
einen Auflageteil, der entlang einer Kante des Hauptgehäuses abgesenkt ist und auf der einen Oberfläche des Hauptgehäuses ausgebildet ist, wo die Anzeigeeinheit angeordnet ist, und einen vorstehenden Teil, der entlang einer Kante des Rahmens ausgebildet und so konfiguriert ist, dass er in dem Auflageteil sitzt, wenn die Berührungs-Eingabeplatte auf der Anzeigeeinheit zusammengeklappt ist.

9. Tragbares Gerät nach einem der Ansprüche 7 bis 8, wobei die Tastenanzeigetafel mit dem ersten Berührungsbildschirm betätigt wird.

## Revendications

1. Dispositif portable, comprenant :
un corps principal (10) comprenant une unité d'affichage (19) configurée pour afficher des informations fournies sur une surface du corps principal ;
un panneau d'entrée tactile (130) couplé de manière à pouvoir se déplacer d'une manière coulissante vers un côté du corps principal et configuré pour être déplacé vers chacune d'une position d'ouverture et d'une position de recouvrement par rapport à l'unité d'affichage,
**caractérisé en ce que** :
le panneau d'entrée tactile comprend des premier (42) et second (44) écrans tactiles transparents fournis respectivement sur des première et seconde surfaces respectives du panneau d'entrée tactile ; et
un commutateur de détection (56) fourni sur au moins l'un du corps principal et du panneau d'entrée tactile et configuré pour générer un signal pour activer le premier écran tactile lorsque le panneau d'entrée tactile est déplacé à la position d'ouverture et pour désactiver le premier écran d'entrée tactile ainsi que pour activer le second écran tactile lorsque le panneau d'entrée tactile est déplacé à la position de recouvrement.

2. Dispositif portable selon la revendication 1, dans lequel le panneau d'entrée tactile comprend en outre :
un panneau de saisie tactile fourni entre le premier écran tactile et le second écran tactile, le panneau de saisie tactile étant configuré pour afficher une pluralité de touches lorsque le premier écran tactile est activé.

3. Dispositif portable selon la revendication 2, dans lequel le panneau d'entrée tactile comprend un cadre formé pour entourer les premiers et second écrans tactiles et le panneau de saisie tactile.

4. Dispositif portable selon la revendication 3, comprenant en outre :
une partie de réception en creux le long d'un bord du corps principal formée sur la surface du corps principal où l'unité d'affichage est disposée ; et
une partie en saillie formée le long d'un bord du cadre et configurée pour être reçue dans la partie de réception lorsque le panneau d'entrée tactile se trouve dans la position de recouvrement par rapport à l'unité d'affichage.

5. Dispositif portable, comprenant :
un corps principal (10) comprenant une unité d'affichage (19) configurée pour afficher des informations fournies sur une surface du corps principal ;
un panneau d'entrée tactile pliable (30) qui est couplé de manière pivotante sur un côté du corps principal et configuré pour être déplié à un angle prédéterminé par rapport à l'unité d'affichage,
**caractérisé en ce que** :
le panneau d'entrée tactile comprend des premier (42) et second (44) écrans tactiles transparents fournis sur des première et seconde surfaces respectives du panneau d'entrée tactile ; et
un organe de détection (56) fourni sur au moins l'un du corps principal et du panneau d'entrée tactile et configuré pour générer un signal pour désactiver le premier écran tactile et pour activer le second écran tactile lorsque le panneau d'entrée tactile est plié, et pour activer le premier écran tactile lorsque le panneau d'entrée tactile est déplié.

6. Dispositif portable selon la revendication 5, dans lequel le panneau d'entrée tactile comprend en outre :
un panneau de saisie tactile fourni entre le premier écran tactile et le second écran tactile, le panneau de saisie tactile étant configuré pour afficher une pluralité de touches lorsque le premier écran tactile est activé,
dans lequel le panneau de saisie tactile est un panneau transparent.

7. Dispositif portable selon la revendication 6, dans lequel le panneau d'entrée tactile comprend un cadre formé pour entourer les premiers et second écrans tactiles et le panneau de saisie tactile.

8. Dispositif portable selon la revendication 7, comprenant en outre :
une partie de réception en creux le long d'un bord du corps principal formée sur la surface du corps principal où l'unité d'affichage est disposée, et une partie en saillie qui est formée le long d'un bord du cadre et configurée pour être reçue dans la partie de réception lorsque le panneau d'entrée tactile est plié sur l'unité d'affichage.

9. Dispositif portable selon l'une quelconque des revendications 7 à 8, dans lequel le panneau de saisie tactile est utilisé avec le premier écran tactile.
